# EUROPÄISCHE PATENTANMELDUNG

(11) **EP 1 702 801 A1**
(43) Veröffentlichungstag der Anmeldung: **20.09.2006**
(21) Anmeldenummer: 05028694.7
(22) Anmeldetag: 30.12.2005
(51) Int. Cl.: B60Q 11/00, B60Q 1/30

(54) **Verfahren und Steuerung zum Überwachen von Leuchten**

(30) Priorität: 18.03.2005 DE 102005012459
(71) Anmelder: ERICH JAEGER GmbH + Co. KG, 61145 Friedberg (DE)
(72) Erfinder: Ruebsam, Carsten, 36088 Hünfeld (DE); Gloe, Karl-Heinz, 61231 Bad Nauheim (DE); Borbe, Thorsten, 61231 Bad Nauheim (DE); Wiese, Wolfgang, 61389 Schmitten (DE)
(74) Vertreter: KEIL & SCHAAFHAUSEN Patentanwälte

(57) **Zusammenfassung**

Es werden ein Verfahren und ein System zum Überwachen von parallel betreibbaren Leuchten (2,3) insbesondere in Kraftfahrzeugen beschrieben, wobei mindestens eine erste Leuchte (2) über einen ersten Leuchtenkanal (4) und mindestens eine zweite (3) Leuchte in Abhängigkeit eines ersten Leuchtensignals für die erste Leuchte (2) über einen zweiten Leuchtenkanal (6) angesteuert werden. Um eine zuverlässige Möglichkeit zur Überwachung parallel betriebener Leuchten zu schaffen, werden der erste und/oder der zweite Leuchtenkanal (4,6) überwacht und bei Ausfall einer Leuchte (2,3) ein von einem Störungssignal einer übergeordneten Steuerung verschiedenes Fehlersignal über einen Signalgeber (11) erzeugt.
Dieses separate Fehlersignal kann in konventioneller Weise direkt an ein Signalmittel oder über einen Busansschluss in ein Bussystem zurückgegeben werden.

## Beschreibung

Die Erfindung betrifft ein Verfahren sowie eine Steuerung zum Überwachen von parallel betreibbaren Leuchten, insbesondere in Kraftfahrzeugen, wobei mindestens eine erste Leuchte über einen ersten Leuchtenkanal und mindestens eine zweite Leuchte in Abhängigkeit eines Leuchtensignals für die erste Leuchte über einen zweiten Leuchtenkanal angesteuert wird. Das erste Leuchtensignal kann dabei ein Signal in dem ersten Leuchtenkanal sein, mit dem die erste Leuchte geschaltet und das von einer Steuerung zum Ansteuern der zweiten Leuchte abgegriffen wird. Alternativ kann das erste Leuchtensignal für die erste Leuchte, in dessen Abhängigkeit das zweite Leuchtensignal für die zweite Leuchte erzeugt wird, auch ein Bussignal sein, das zur Erzeugung eines Signals in dem ersten Leuchtenkanal dient und unmittelbar in dem Bussystem abgegriffen wird.

Derartige Verfahren und Steuerungen sind bspw. aus der Automobilindustrie bekannt, in der sie zur Steuerung der Blinkerleuchten an einem Zugfahrzeug und einem Anhängerfahrzeug eingesetzt werden. Sobald eine der angesteuerten Blinkerleuchten ausfällt, wird dies durch eine höhere Blinkfrequenz einer Anzeige im Fahrzeugcockpit angezeigt. Die Aufgabe der Ansteuerung der Blinkerleuchten übernimmt ein im Fahrzeug montiertes Anhängersteuergerät, das in die Leitungen der Fahrzeugblinkerleuchten des Zugfahrzeugs eingeschleift oder direkt an das Fahrzeugbussystem angeschlossen ist. Damit verfügt das Anhängersteuergerät über die erforderlichen Informationen des zugfahrzeugseitigen Blinkersignals zur Ansteuerung der Anhängerblinkerleuchte. Die für die Ansteuerung der Anhängerblinkerleuchte benötigte Energie erhält das Ansteuergerät durch Anschluss an eine fahrzeugseitige Energiequelle, bspw. die sogenannte Klemme 30 mit einer positiven Dauerspannung.

Ein Anhängersteuergerät, welches das erste Leuchtensignal in dem ersten Leuchtenkanal detektiert und abgreift, kann ferner die Funktion der Anhängerblinkerleuchte (zweite Leuchte) überwachen und im Fehlerfall die Leitung des ersten Leuchtenkanals zwischen einem fahrzeugseitigen Bordnetzsteuergerät als übergeordneter Steuerung und der als erster Leuchte dienenden fahrzeugseitigen Blinkerleuchte unterbrechen. Dem Bordnetzsteuergerät wird auf diese Weise eine defekte fahrzeugseitige (erste) Blinkerleuchte simuliert, worauf der Defekt durch eine Blinkfrequenzerhöhung oder andere Fehleranzeigen im Fahrzeugcockpit angezeigt wird. Die Funktion der fahrzeugseitigen (ersten) Blinkerleuchte wird in diesem Fall jedoch durch das Anhängersteuergerät gewährleistet, das die fahrzeugseitige (erste) Blinkerleuchte nun mit Spannung aus der separaten Energiequelle des Anhängersteuergerätes weiter versorgt. Somit kann im Falle eines Fehlers der zweiten Leuchte durch eine Lastmanipulation im Zugfahrzeug die Störung angezeigt werden, ohne dass die Funktion der fahrzeugseitigen (ersten) Blinkerleuchte gestört wird.

Um einen unnötigen Stromverbrauch zu vermeiden, wird in neuen Bordnetzsteuergeräten der fahrzeugseitige (erste) Leuchtenkanal nach der Erkennung einer defekten Leuchte jedoch deaktiviert. Daher ist nach Ausfall der fahrzeugseitigen Blinkerleuchte das Blinkersignal für ein Anhängersteuergerät nicht mehr abgreifbar. Ferner kann ein Defekt der zweiten Blinkerleuchte am Anhänger dem Fahrzeugführer nicht mehr signalisiert werden, ohne dass der fahrzeugseitige Blinker (erste Leuchte) ebenfalls ausfällt.

Ein ähnliches Problem ergibt sich bei dem Abgriff eines Bussignals aus einem Bussystem, das heute häufig zur Steuerung und Regelung unter anderem auch von Lichtsignalen des Kraftfahrzeugs eingesetzt wird. Hierfür werden bspw. die Bussysteme MOST, LIN, CAN und FlexRay verwendet. Der Vorteil von Bussystemen besteht darin, dass sich die ursprüngliche Verkabelung der einzelnen Systemkomponenten im Kraftfahrzeug reduziert, wodurch Einbauzeit, Rohstoffe und damit Geld gespart werden können. Die Datenpakete eines Bussignals, sogenannte "Frames", werden von einem entsprechenden Steuergerät ausgewertet und schalten die dazugehörige Funktion. Wenn das Leuchtensignal für die erste Leuchte als Bussignal in dem Bussystem abgegriffen und von einem Steuergerät zum Ansteuern der zweiten Leuchte, bspw. einem Anhängersteuergerät, ausgewertet wird, ist es nicht möglich, bei Ausfall der anhängerseitigen zweiten Leuchte ein entsprechendes Fehlersignal in das Bussystem zurückzuschreiben, da die übergeordnete Steuerung, welche das Leuchtensignal für die erste Leuchte erzeugt, dieses Fehlersignal als einen Funktionsausfall der ersten Leuchte verstehen würde, so dass der erste Leuchtenkanal deaktiviert wird. Daher kann auch bei einem Bussystem der Ausfall der zweiten Leuchte nicht in geeigneter Weise angezeigt werden.

Aufgabe der vorliegenden Erfindung ist es daher, eine Möglichkeit zur Überwachung parallel betreibbarer Leuchten anzugeben, bei der der Ausfall jeder Leuchte ohne weitere Funktionseinschränkungen der parallel angesteuerten Leuchten angezeigt werden kann.

Diese Aufgabe wird mit den Merkmalen der Ansprüche 1 und 11 gelöst. Bei dem erfindungsgemäßen Verfahren ist insbesondere vorgesehen, dass der erste und/oder der zweite Leuchtenkanal überwacht werden und bei Ausfall einer Leuchte ein von dem Störungssignal einer übergeordneten Steuerung verschiedenes Fehlersignal erzeugt wird. Weil dieses Fehlersignal nicht dem Störungssignal eines fahrzeugeigenen Bordnetzsteuergerätes entspricht, wird bei Auftreten des erfindungsgemäßen Fehlersignals keine Funktion der übergeordneten Steuerung ausgelöst, welche die Ansteuerung der ersten Leuchte deaktiviert und damit zwangsläufig zu einem Ausfall der parallel betriebenen zweiten Leuchte führt. Dennoch kann der Ausfall der Leuchte angezeigt werden, so dass die betroffene Leuchte getauscht werden kann.

Dazu kann das Fehlersignal bspw. mittels eines erfindungsgemäß vorgesehenen Signalgebers optisch und/oder akustisch ausgegeben werden.

Um die Ausgabe des Fehlersignals von der übergeordneten Steuerung zu trennen, kann für die Ausgabe des Fehlersignals ein von einem Signalgeber für ein Störungssignal einer übergeordneten Steuerung verschiedener Signalgeber verwendet werden, der insbesondere einer separaten Steuerung entsprechend der Erfindung, bspw. einem Anhängersteuergerät, zugeordnet ist.

Obwohl die verwendeten Signalgeber der übergeordneten Steuerung und der erfindungsgemäßen Steuerung vorteilhafter Weise voneinander getrennt sind, ist es möglich, dass die Signalgeber für das Fehlersignal und die Signalgeber für das Störungssignal der übergeordneten Steuerung dieselben Signalmittel verwenden, auf denen sowohl das Fehlersignal als auch ein Störungssignal einer übergeordneten Steuerung angezeigt wird. Dazu eignen sich insbesondere akustische und/oder optische Signalmittel wie ein Display, ein Lautsprecher und/oder ein Summer. In Kraftfahrzeugen sind derartige Signalmittel in aller Regel bereits vorhanden, so dass bei dem erfindungsgemäßen Verfahren auf bereits vorhandene Ressourcen in dem Kraftfahrzeug zurückgegriffen wird, um die Kosten des erfindungsgemäßen Systems zu verringern.

Dazu kann das Fehlersignal erfindungsgemäß über mindestens ein vorhandenes Signalmittel, insbesondere einen Lautsprecher, ausgegeben werden, welches über einen Schalter zum Aufschalten eines Signals auf das vorhandene Signalmittel, insbesondere ein Doppelwechslerrelais oder eine elektronische Schaltung, parallel zu einer anderen Verwendung angesteuert wird. Dieser Schalter kann insbesondere von der erfindungsgemäßen Steuerung zur Durchführung des beschriebenen Verfahrens angesteuert werden und in diese integriert oder an geeigneter Stelle im Fahrzeug angeordnet sein. Dieser Schalter bewirkt, dass das Signalmittel, bspw. der fahrzeugseitige Lautsprecher, von einer werkseitig vorgesehenen Ansteuerung getrennt und auf das Anhängersteuergerät geschaltet wird.

Erfindungsgemäß kann die andere Verwendung dieses Signalmittels während der Ausgabe des Fehlersignals vollständig deaktiviert oder bspw. durch eine Parallelschaltung beider Signale eingeschränkt werden. Bei einem Display kann dazu das Fehlersignal bspw. über das vorhandene Signalbild eingeblendet oder das an sich dargestellte Signalbild kurzzeitig vollständig ausgeblendet werden. Bei einem Lautsprecher, welcher bspw. zur Radiowiedergabe verwendet wird, kann das ursprüngliche Signal gedrosselt und das Fehlersignal mit erhöhter Lautstärke ausgegeben werden. Es ist auch möglich, das aus dem Lautsprecher normalerweise ausgegebene Signal vollständig abzuschalten, um die Aufmerksamkeit für die Wahrnehmung des Fehlersignals zu erhöhen. Bei einer gleichzeitigen Verwendung eines Signalmittels für verschiedene Ausgaben kann jeder Ausgabe eines Signals eine Priorität zugewiesen werden, wobei die Ausgabe eines Signals mit höherer Priorität Vorrang hat vor der Ausgabe eines Signals mit niedrigerer Priorität.

Beispielsweise kann für das erfindungsgemäße Fehlersignal eine Sprachausgabe erzeugt werden, ggf. zusätzlich zu einer dauerhaften optischen Signalisierung.

Zusätzlich oder alternativ kann das erfindungsgemäß erzeugte Fehlersignal an eine dafür vorgesehene Busschnittstelle eines Bussystems ausgegeben werden. Diese Busschnittstelle kann bspw. vorhanden sein oder erfindungsgemäß eingerichtet werden, um Meldungen verschiedener Art nach einem vorgegebenen Protokoll in ein übergeordnetes Bussystem zurückzumelden, welches diese Meldungen auswertet. Dadurch kann die erfindungsgemäß erzeugte Fehlermeldung in der gewünschten Weise durch Signalmittel ausgegeben werden, auf welche das Bussystem Zugriff hat, ohne dass diese Signalmittel separat zur Verfügung gestellt werden müssen. Das in das Bussystem zurückgegebene Fehlersignal ist dabei verschieden von einem internen Störungssignal einer übergeordneten Steuerung, mit dem der Defekt der ersten der beiden parallel betriebenen Leuchten innerhalb des Bussystems signalisiert wird und das ggf. die Abschaltung des ersten Leuchtenkanals nach sich zieht.

Bei Anschluss an ein Bussystem kann das in einem Bussystem als Bussignal übertragene erste Leuchtensignal der ersten Leuchte ausgelesen und in Abhängigkeit dieses ersten Leuchtensignals das zweite Leuchtensignal für die zweite Leuchte erzeugt werden. Dazu werden die das Bussignal bildenden Datenpakete bzw. Frames von einem erfindungsgemäßen Steuerungsgerät ausgewertet, welches das zweite Leuchtensignal zum Ansteuern der zweiten Leuchte in dem zweiten Leuchtenkanal erzeugt. Dazu kann eine an die erfindungsgemäße Steuerung angeschlossene Energiequelle verwendet werden, welche bspw. ein positives Dauersignal entsprechender Spannung liefert. Da im Falle eines Abgriffs des Bussignals für die erste Leuchte die Funktion der ersten Leuchte durch ein von dem Bussignal angesteuertes Lichtmodul des Zugfahrzeugs überwacht wird, ist in dieser Variante die Überwachung der ersten Leuchte durch das erfindungsgemäße Verfahren nicht notwendig, da insoweit auf die vorhandenen Standardfunktionen der übergeordneten Steuerung zurückgegriffen werden kann.

Gemäß einer bevorzugten Anwendung des erfindungsgemäßen Verfahrens ist die erste Leuchte eine Blinkerleuchte eines Zugfahrzeugs, insbesondere eines Personenkraftwagens, und die zweite Leuchte die Blinkerleuchte eines Anhängers. Natürlich ist die erfindungsgemäße Anwendung nicht auf die Ansteuerung bzw. Überwachung eines rechten und linken Blinkers sowie weiterer, ggf. rechter und linker Beleuchtungseinheiten eines Zugfahrzeugs und eines Anhängers im Kraftfahrzeugbereich beschränkt, sondern kann vorteilhaft für alle Anwendungen eingesetzt werden, in denen eine zweite Leuchte in Abhängigkeit von einer ersten Leuchte zuverlässig angesteuert werden muss.

Dementsprechend bezieht sich die Erfindung auch auf eine Steuerung zum Überwachen von parallel betreibbaren Leuchten, insbesondere zur Durchführung des vorbeschriebenen Verfahrens, mit einem ersten Anschluss zum Abgreifen eines von einer übergeordneten Steuerung erzeugten ersten Leuchtensignals für eine erste Leuchte, insbesondere einem Anschluss an einen ersten Leuchtenkanal oder ein Bussystem, und einem zweiten Anschluss an einen zweiten Leuchtenkanal mit einer zweiten Leuchte, welche in Abhängigkeit des ersten Leuchtensignals der ersten Leuchte angesteuert wird. Ferner weist die Steuerung eine Überwachungsschaltung zum Überwachen der Funktion mindestens einer Leuchte auf. Um den Defekt einer Leuchte ohne Einfluss auf die Funktionsweise der anderen, parallel betriebenen Leuchte anzeigen zu können, weist die Überwachungsschaltung einen Signalgeber zum Erzeugen eines von einem Störungssignal der übergeordneten Steuerung verschiedenen, optischen und/oder akustischen Fehlersignals für den Ausfall einer Leuchte auf. Damit kann der Ausfall der ersten oder zweiten Leuchte signalisiert werden, ohne dass auf ein Störsignal der übergeordneten Steuerung zurückgegriffen werden muss, welches unter Umständen die Funktionsabschaltung eines Leuchtenkanals nach sich zieht und das Ansteuern der parallelen Leuchte unmöglich macht, weil die erfindungsgemäße Steuerung für das Ansteuern der Leuchte(n) und die Überwachung der Leuchtenfunktion nach Abgriff eines ersten Leuchtensignals von der übergeordneten Steuerung autark arbeitet.

Erfindungsgemäß kann die Steuerung optische und/oder akustische Signalmittel zur Ausgabe des Fehlersignals aufweisen, insbesondere ein Display, einen Lautsprecher und/oder einen Summer.

Um bereits vorhandene Signalmittel zu verwenden, die auch zur Aufgabe anderer Signale herangezogen werden, kann die Steuerung erfindungsgemäß einen Schalter, insbesondere ein Doppelwechslerrelais oder eine elektronische Schaltung zum Aufschalten eines Signals auf vorhandene Signalmittel, insbesondere einen Lautsprecher aufweisen, welches durch den Schalter parallel zu einer anderen Verwendung gesteuert wird. Dazu kann der Schalter erfindungsgemäß die andere Verwendung während der Ausgabe des Fehlersignals deaktivieren oder einstellen.

Um das erste Leuchtensignal direkt als Bussignal der übergeordneten Steuerung abgreifen zu können, kann ferner ein Anschluss an ein Bussystem zum Abgreifen des ersten Leuchtensignals vorgesehen sein. Ferner kann insbesondere der Signalgeber oder die Steuerung einen Anschluss an ein Bussystem zum Ausgeben des Fehlersignals aufweisen. Auf diese Weise kann das Fehlersignal, sofern das übergeordnete Bussystem dafür eingerichtet ist, auch innerhalb des Bussystems ausgewertet werden, ohne dass die innerhalb des Bussystems vorgesehenen Störungssignale die Deaktivierung der ersten und/oder zweiten Leuchte bewirken.

Zum Ansteuern der zweiten sowie ggf. der ersten Leuchte weist die Steuerung vorzugsweise einen Anschluss an eine Energiequelle sowie an eine Steuerschaltung, insbesondere einen Mikrokontroller, ein CPLD (Complex Programmable Logic Device) oder ein FPGA (Field Programmalbe Gate Array) auf, welches zur Ansteuerung der ersten und/oder zweiten Leuchte ein erstes und/oder zweites Leuchtensignal in einem ersten und/oder zweiten Leuchtenkanal erzeugt.

Weitere Merkmale, Vorteile und Anwendungsmöglichkeiten der Erfindung ergeben sich auch aus der nachfolgenden Beschreibung von Anwendungsbeispielen und der Zeichnung. Dabei bilden alle beschriebenen und/oder bildlich dargestellten Merkmale für sich oder in beliebiger Kombination den Gegenstand der vorliegenden Erfindung, auch unabhängig von der Zusammenfassung in den Ansprüchen oder deren Rückbezügen.

Es zeigen:
- Fig.1: einen schematischen Schaltplan einer erfindungsgemäßen Steuerung entsprechend einer ersten Ausführungsform, und
- Fig. 2: einen schematischen Schaltplan einer erfindungsgemäßen Steuerung entsprechend einer zweiten Ausführungsform.

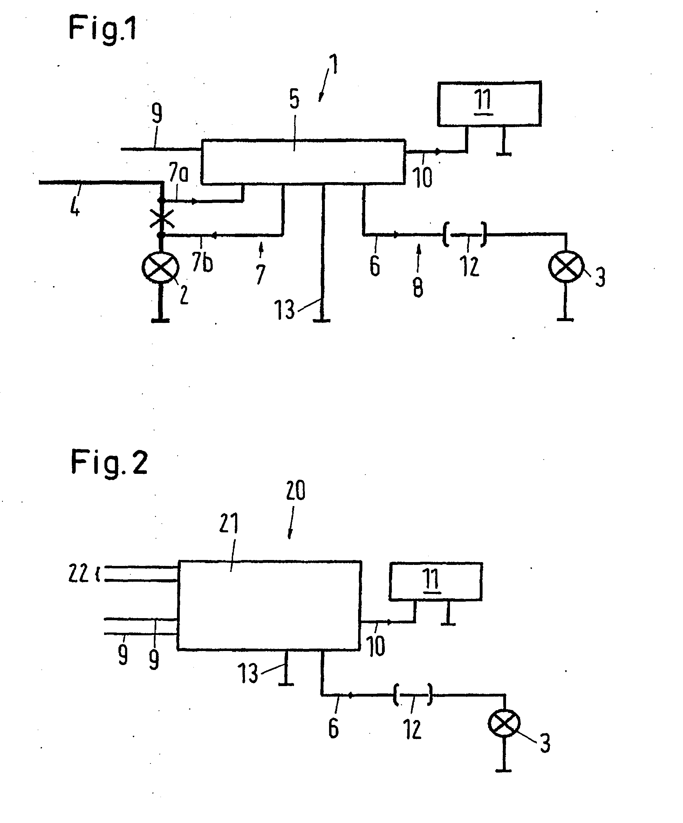

Die in Fig. 1 dargestellte Steuerung zum Ansteuern parallel betreibbarer Leuchten 2, 3 zeigt ein Anwendungsbeispiel, bei dem die erste Leuchte 2 eine Blinkerleuchte eines Zugfahrzeugs und die zweite Leuchte 3 die entsprechende Blinkerleuchte eines Anhängers ist. Bei dem Steuergerät 1 handelt es sich jedoch um ein Anhängersteuergerät, insbesondere für Personenkraftwagen, mit dem die gesamte Beleuchtungsanlage eines Anhängers angesteuert werden kann und dessen Funktion der Einfachheit halber anhand von Blinkerleuchten beschrieben wird.

In dem Zugfahrzeug ist ein erster Leuchtenkanal 4 vorgesehen, der von einer nicht dargestellten übergeordneten Steuerung des Kraftfahrzeugs angesteuert wird. Dazu ist der Leuchtenkanal 4 mit einer ersten Energiequelle verbunden, welche ein erstes Leuchtensignal aussendet, wenn die Blinkerleuchte 2 des Zugfahrzeugs in dem ersten Leuchtenkanal 4 aufleuchten soll. Die übergeordnete Steuerung des Zugfahrzeugs funktioniert unabhängig davon, ob ein Anhänger an das Zugfahrzeug angeschlossen ist oder nicht.

Wenn ein Anhänger an das Zugfahrzeug angeschlossen ist, müssen die an dem Zugfahrzeug erzeugten Lichtsignale, insbesondere auch das Blinkerlicht, auf den Anhänger übertragen werden. Dazu ist eine elektronische Schaltung 5 mit einer nicht detailliert gezeigten Steuerschaltung vorgesehen, welche das erste Leuchtensignal in dem ersten Leuchtenkanal 4 abgreift und in Abhängigkeit von dem ersten Leuchtensignal die zweite Leuchte 3 in den zweiten Leuchtenkanal 6 ansteuert. Dementsprechend weist die elektronische Schaltung 5 einen ersten Anschluss 7 an den ersten Leuchtenkanal 4 zum Empfangen und/oder Senden eines ersten Leuchtensignals und einen zweiten Anschluss 8 an dem zweiten Leuchtenkanal 6 zum Empfangen und/oder Senden des zweiten Leuchtensignals an die bzw. von der zweiten Leuchte 3 aus.

Der erste Anschluss 7 ist dabei derart ausgebildet, dass der erste Leuchtenkanal 4 zwischen einer von dem Leuchtenkanal 4 zu der elektronischen Schaltung 5 hinführenden Leitung 7a der elektronischen Schaltung 5 zu dem ersten Leuchtenkanal 4 rückführenden Leitung 7b unterbrochen werden kann.

Die elektronische Schaltung 5 weist ferner einen Energieanschluss 9 an eine von der Energiequelle des ersten Leuchtenkanals vorzugsweise verschiedene Energiequelle auf, welche bspw. ein Dauerplussignal liefert. Dies kann die sogenannte Klemme 30 der fahrzeugseitigen Energieversorgung sein. Ferner ist die elektronische Schaltung 5 über einen Signalanschluss 10 an einen Signalgeber 11 angeschlossen, welcher die Ausgabe von Fehlermeldungen, bspw. bei einem Defekt der ersten Leuchte 2 und/oder der zweiten Leuchte 3, über geeignete Signalmittel veranlasst. Zur Überwachung der Leuchten 2, 3 weist die elektronische Schaltung 5 ferner eine Überwachungsschaltung auf.

Nachfolgend wird die Funktionsweise der elektronischen Schaltung 5 bzw. der Steuerschaltung und der Überwachungsschaltung näher beschrieben.

Wenn ein erstes Leuchtensignal zur Ansteuerung der ersten Leuchte 2 in dem ersten Leuchtenkanal 4 erkannt wird, schaltet die elektronische Schaltung 5 den zweiten Leuchtenkanal 6 mit der zweiten Leuchte 3. Zur Erzeugung des zweiten Leuchtensignals für die zweite Leuchte 3 greift die elektronische Schaltung 5 auf die über einen separaten Energieanschluss 9 angeschlossene Energiequelle zurück. Das zweite Leuchtensignal zur Ansteuerung der zweiten Leuchte 3 wird dann über den zweiten Leuchtenkanal 6 und den Anhängerstecker 12 zu der Blinkerleuchte 3 des Anhängers übertragen, damit dieser zusammen mit der Blinkerleuchte 2 des Zugfahrzeugs aufleuchtet.

Durch die in die elektronische Schaltung 5 integrierte Überwachungsschaltung wird die Funktion der ersten Leuchte 2 und der zweiten Leuchte 3 überwacht. Wenn der elektronischen Schaltung 5 ein Ausfall der ersten Leuchte 2 signalisiert wird, schaltet diese den ersten Leuchtenkanal 4 über die hinführende Leitung 7a und einen in der elektronischen Schaltung 5 geeignet realisierten, insbesondere elektronischen Schalter direkt auf den zweiten Leuchtenkanal 6, in dem die zweite Leuchte angeordnet ist. Auf diese Weise wird die zweite Leuchte 3 direkt durch das von der übergeordneten Steuerung des Zugfahrzeugs ausgesendete erste Leuchtensignal in dem ersten Leuchtenkanal 4 angesteuert, welches auf den zweiten Leuchtenkanal 6 umgeleitet wurde. Dadurch wird der übergeordneten Steuerung des Kraftfahrzeugs durch das Schalten der zweiten Leuchte 3 die ordnungsgemäße Funktion der ersten Leuchte 2 simuliert, so dass der erste Leuchtenkanal 4 nicht abgeschaltet wird. Alternativ dazu kann die Steuerung 5 bei einem Ausfall der ersten Leuchte 2 dieser einen Widerstand als elektrischen Verbraucher parallel schalten, welcher in der elektronischen Schaltung 5 integriert ist und für die übergeordnete Steuerung in dem Zugfahrzeug die ordnungsgemäße Funktion der ersten Leuchte 2 simuliert.

Durch die erfindungsgemäß vorgesehene Simulation der ordnungsgemäßen Funktion der Leuchte 2 wird also das Abschalten des ersten Leuchtenkanals 4 durch eine übergeordnete Steuerung für den Fall verhindert, dass diese den Ausfall der ersten Leuchte 2 erkennt. Dadurch kann die parallel zu betreibende zweite Leuchte 3 zuverlässig auch bei Ausfall der ersten Leuchte 2 angesteuert werden.

Um den Defekt der ersten Leuchte 2 oder der zweiten Leuchte 3 nicht nur festzustellen, sondern auch anzeigen zu können, ist erfindungsgemäß in die elektronische Schaltung 5 der Steuerung 1 eine Überwachungsschaltung integriert, welche bspw. mittels einer Open-Load-Detektion die Leuchten 2 und/oder 3, respektive den ersten und/oder den zweiten Leuchtenkanal 4, 6, überwacht. Bei Ausfall einer Leuchte 2, 3 wird dann ein von dem Störungssignal einer übergeordneten Steuerung verschiedenes Fehlersignal erzeugt, welches den Ausfall einer Leuchte 2, 3 anzeigt, ohne dass die übergeordnete Steuerung weitere Aktionen ausführt und bspw. einen Leuchtenkanal 4, 6 deaktiviert. Dazu ist über einen Signalanschluss 10 ein Signalgeber 11 an die elektronische Schaltung 5 angeschlossen, welche ein optisches und/oder akustisches Fehlersignal erzeugt, das über ein an die Steuerung 5 oder den Signalgeber 11 angeschlossenes Signalmittel ausgegeben wird.

Anschließbare Signalmittel umfassen einen in Fig. 1 nicht dargestellten Lautsprecher, der in dem Zugfahrzeug ohnehin vorhanden ist. Die elektronische Schaltung 5 bzw. der Signalgeber 11 steuert dazu einen Schalter zum Aufschalten eines Signals auf den Lautsprecher, der durch den Schalter parallel zu einer anderen Verwendung gesteuert wird. Dieser Schalter kann insbesondere ein Doppelwechslerrelais oder eine entsprechende elektronische Schaltung sein und durch das Fehlersignal von dem Signalgeber 11 angesteuert werden. Durch den Schalter wird die werkseitig vorgesehene Ansteuerung des Lautsprechers vollständig getrennt, so dass der Lautsprecher für die Zeit der Ausgabe des Fehlersignals durch die Steuerung 1 bzw. den Signalgeber 11 angesteuert werden kann. Alternativ dazu kann der Lautstärkepegel der werkseitigen Ansteuerung reduziert und das Fehlersignal mit einem erhöhten Lautstärkepegel ausgegeben werden, so dass die werkseitige Ansteuerung und die Ansteuerung durch den Signalgeber 11 mit unterschiedlicher Priorität parallel stattfinden. Um die Art des Fehlers zu erkennen, ist vorzugsweise eine Sprachausgabe durch den Signalgeber 11 vorgesehen.

Parallel können auch andere Signalmittel, bspw. ein Display oder dgl. angesteuert werden. Die in Fig. 2 dargestellte Steuerung 20 ist der Steuerung 1 grundsätzlich ähnlich. Die Steuerung 20 mit der elektronischen Steuerschaltung 21 weist im Gegensatz zu der Steuerung 1 jedoch einen Anschluss 22 an ein fahrzeugseitiges Bussystem auf, in dem das erste Leuchtensignal als Bussignal übertragen wird. Ferner sind Anschlüsse 9 an Energieversorgungen des fahrzeugseitigen Versorgungsnetzes vorgesehen, bspw. an Klemme 15 und Klemme 30.

Wenn die elektronische Steuerschaltung 21 ein für den in Fig. 2 nicht dargestellten ersten Leuchtenkanal 4 mit der ersten Leuchte 2 bestimmtes ersten Leuchtensignal empfängt, erzeugt diese ein zweites Leuchtensignal in dem zweiten Leuchtenkanal 6, um über den Anhängerstecker 12 die anhängerseitige zweite Leuchte 3, bspw. die Blinkerleuchte, anzusteuern. Die Energie für die Erzeugung des zweiten Leuchtensignals erhält die elektronische Leitung 21 über die separaten Energieanschlüsse 9.

Dabei wird die Funktion der zweiten Leuchte 3 durch die Überwachungsschaltung der elektronischen Schaltung 21 mit überwacht und bei einem Defekt in der für die Steuerung 1 gemäß Fig. 1 ausführlich beschriebenen Weise angezeigt.

Die Ansteuerung und Überwachung der ersten Leuchte 2 in dem ersten Leuchtenkanal 4 geschieht dagegen über ein separates, in Fig. 2 ebenfalls nicht dargestelltes Lichtmodul, das an das fahrzeugseitige Bussystem angeschlossen ist.

Daher überwacht die Steuerung 20 erfindungsgemäß nur den zweiten Leuchtenkanal 6 bzw. die zweite Leuchte 3.

Durch die Erfindung besteht sowohl bei einem busfähigen als auch bei einem konventionellen Steuergerät die Möglichkeit, einen Defekt parallel betriebener Leuchten zuverlässig anzuzeigen, ohne Einfluss auf die weitere Funktion der Leuchten zu nehmen. Durch die Erzeugung eines separaten Fehlersignals, welches über den Signalgeber 11 in konventioneller Weise direkt an ein Signalmittel oder über einen Busanschluss 22 in ein Bussystem zurückgegeben werden kann, ist es nicht notwendig, ein Störungssignal einer übergeordneten Steuerung zu simulieren, um den Defekt einer der beiden parallel betriebenen Leuchten anzuzeigen.

Bezugszeichenliste:
- 1: Steuerung
- 2: erste Leuchte
- 3: zweite Leuchte
- 4: erster Leuchtenkanal
- 5: elektronische Schaltung
- 6: zweiter Leuchtenkanal
- 7: erster Anschluss
- 8: zweiter Anschluss
- 9: Energieanschluss
- 10: Signalanschluss
- 11: Signalgeber
- 12: Anhängerstecker
- 13: Erde

- 20: Steuerung
- 21: elektronische Schaltung
- 22: Anschluss

## Patentansprüche

1. Verfahren zum Überwachen von parallel betreibbaren Leuchten (2, 3), insbesondere in Kraftfahrzeugen, wobei mindestens eine erste Leuchte (2) über einen ersten Leuchtenkanal (4) und mindestens eine zweite (3) Leuchte in Abhängigkeit eines ersten Leuchtensignals für die erste Leuchte (2) über einen zweiten Leuchtenkanal (6) angesteuert werden, **dadurch gekennzeichnet, dass** der erste und/oder der zweite Leuchtenkanal (4, 6) überwacht und bei Ausfall einer Leuchte (2, 3) ein von einem Störungssignal einer übergeordneten Steuerung verschiedenes Fehlersignal erzeugt wird.

2. Verfahren nach Anspruch 1, **dadurch gekennzeichnet, dass** das Fehlersignal optisch und/oder akustisch ausgegeben wird.

3. Verfahren nach Anspruch 2, **dadurch gekennzeichnet, dass** zur Ausgabe des Fehlersignals ein von einem Signalgeber für ein Störungssignal einer übergeordneten Steuerung verschiedener Signalgeber (11) verwendet wird.

4. Verfahren nach Anspruch 2 oder 3, **dadurch gekennzeichnet, dass** Signalgeber (11) für das Fehlersignal und Signalgeber für das Störungssignal gleiche Signalmittel, insbesondere akustische und/oder optische Signalmittel wie Display, Lautsprecher und/oder Summer, verwenden.

5. Verfahren nach einem der Ansprüche 2 bis 4, **dadurch gekennzeichnet, dass** das Fehlersignal über mindestens ein vorhandenes Signalmittel, insbesondere einen Lautsprecher, ausgegeben wird, welches über einen Schalter zum Aufschalten eines Signals auf das vorhandene Signalmittel, insbesondere ein Doppelwechslerrelais oder eine elektronische Schaltung, parallel zu einer anderen Verwendung angesteuert wird.

6. Verfahren nach Anspruch 5, **dadurch gekennzeichnet, dass** die andere Verwendung während der Ausgabe des Fehlersignals deaktiviert oder eingeschränkt wird.

7. Verfahren nach einem der Ansprüche 2 bis 6, **dadurch gekennzeichnet, dass** für das Fehlersignal eine Sprachausgabe erzeugt wird.

8. Verfahren nach einem der vorhergehenden Ansprüche, **dadurch gekennzeichnet, dass** das Fehlersignal als Bussignal an eine externe Busschnittstelle ausgegeben wird.

9. Verfahren nach einem der vorhergehenden Ansprüche, **dadurch gekennzeichnet, dass** das in einem Bussystem übertragene erste Leuchtensignal für die erste Leuchte (2) ausgelesen und in Abhängigkeit des ersten Leuchtensignals das zweite Leuchtensignal für die zweite Leuchte (3) erzeugt wird.

10. Verfahren nach einem der vorhergehenden Ansprüche, **dadurch gekennzeichnet, dass** die erste Leuchte (2) eine Blinkerleuchte eines Zugfahrzeugs und die zweite Leuchte (3) eine Blinkerleuchte eines Anhängers ist.

11. Steuerung zum Überwachen von parallel betreibbaren Leuchten (2, 3), insbesondere zur Durchführung des Verfahrens nach einem der Ansprüche 1 bis 10, mit einem ersten Anschluss (7, 22) zum Abgreifen eines von einer übergeordneten Steuerung erzeugten ersten Leuchtensignals für eine erste Leuchte (2) und einem zweiten Anschluss (8) an einen zweiten Leuchtenkanal (6) mit einer zweiten Leuchte (3), welche in Abhängigkeit des ersten Leuchtensignals der ersten Leuchte (2) angesteuert wird, und einer Überwachungsschaltung zum Überwachen der Funktion einer Leuchte (2, 3), **dadurch gekennzeichnet, dass** die Überwachungsschaltung einen Signalgeber (11) zum Erzeugen eines von einem Störungssignal der übergeordneten Steuerung verschiedenen, optischen und/oder akustischen Fehlersignals für den Ausfall einer Leuchte (2, 3) aufweist.

12. Steuerung nach Anspruch 11, **dadurch gekennzeichnet, dass** die Steuerung (1, 20) optische und/oder akustische Signalmittel zur Ausgabe des Fehlersignals aufweist, insbesondere Display, Lautsprecher und/oder Summer.

13. Steuerung nach Anspruch 11 oder 12, **dadurch gekennzeichnet, dass** die Steuerung (1, 20) einen Schalter, insbesondere ein Doppelwechslerrelais oder eine elektronische Schaltung, zum Aufschalten eines Signals auf vorhandene Signalmittel, insbesondere einen Lautsprecher, aufweist, welches durch den Schalter parallel zu einer anderen Verwendung gesteuert wird.

14. Steuerung nach Anspruch 13, **dadurch gekennzeichnet, dass** der Schalter die andere Verwendung während der Ausgabe des Fehlersignals deaktiviert oder einschränkt.

15. Steuerung nach einem der Ansprüche 11 bis 14, **dadurch gekennzeichnet, dass** ein Anschluss (22) an ein Bussystem zum Abgreifen des ersten Leuchtensignals vorgesehen ist.

16. Steuerung nach einem der Ansprüche 11 bis 15, **dadurch gekennzeichnet, dass** mindestens ein Anschluss (9) an eine Energiequelle vorgesehen ist.

17. Steuerung nach einem der Ansprüche 11 bis 16, **dadurch gekennzeichnet, dass** eine Steuerschaltung, insbesondere ein Mikrokontroller, CPLD und/oder FPGA, zur Ansteuerung der ersten und/oder zweiten Leuchte (2, 3) ein erstes und/oder zweites Steuersignal erzeugt.
